# EUROPEAN PATENT SPECIFICATION

(11) **EP 3 579 684 B1**
(45) Date of publication and mention of the grant of the patent: **21.06.2023**
(21) Application number: 18700342.1
(22) Date of filing: 11.01.2018
(51) Int. Cl.: A01G 3/025

(54) **HANDHELD TOOL**
HANDHALTBARES WERKZEUG
OUTIL À MAIN

(30) Priority: 07.02.2017 DE 102017001110
(43) Date of publication of application: 18.12.2019
(73) Proprietor: Husqvarna AB, 561 82 Huskvarna (SE)
(72) Inventor: KOHL, Peter, 89257 Illertissen (DE)
(74) Representative: Finkele, Rolf
(86) International application number: PCT/EP2018/050668
(87) International publication number: WO 2018/145851

(56) References cited:
- EP-A1- 2 194 771
- CN-U- 205 320 669
- DE-U1- 20 116 509

## Description

### TECHNICAL FIELD

The present invention relates to handheld tools, and more particularly to a pruning lopper.

### BACKGROUND

Various handheld tools used for gardening purpose are well known in the art. The handheld tools are designed to perform various gardening related operations such as, trimming, watering, spreading fertilizers, etc. The tools used for trimming parts such as branches may generally be carried out by using pruners, saceuters, cutters or any other tool having at least one movable cutting part. The trimming or cutting tools may be operated mechanically or electrically using a battery power supply or AC supply. Alternatively, the tools may be operated manually by an operator. The tools that are operated manually include pulling of a handle member for activating an implement member of the tool for trimming or cutting operations. As the handle member is manually pulled during the operations, the tool may need to be held by the operator all the time during the operation of the tool. For holding the tool, a holding member of the tool is arranged perpendicularly with respect to a pole member of the tool is used. In a case where the parts of the plants or bushes or trees are having varying sizes and oriented differently, the tool may need to be rotated and held for performing the operations. The holding member of the tool is typically fixed to the pole member of the tool. When the parts like, branches or twigs of the plants are oriented in different directions, the operator may be required to either rotate the tool for orienting the tool with respect to the parts for cutting or trimming operations. The tool may be repeatedly oriented or changed with respect to the parts to be cut or trimmed. As the tool is positioned according to the parts, the hands of the operator are required to be shifted on the pole member of the tool or the tool at the different locations for maneuvering the tool for cutting or
trimming operations. Further, the handle member and the holding member are fixedly connected at the pole member of the tool. Thus, the hands of the operator may experience inconvenience during cutting or trimming operations, if the tool needs to be oriented at various orientations. However, the rotation or orientation of the tool may reduce operational stability and may cause inconvenience and fatigue to the operator.

The US Patent 8,079,151 discloses pruning shears having angle adjustable function. The pruning shear includes pruning hook. The pruning hook includes a handle unit, an adjusting unit mounted on the handle unit and a cutting unit mounted on the adjusting unit. The adjusting unit includes a support member mounted on the handle unit, a fastening member is releasably mounted on the support member and an adjusting member having a first end provided with an adjusting ball is rotatably mounted between the support member and the fastening member and a second end provided with a locking tube is connected with the cutting unit. Thus, the adjusting ball of the adjusting member is rotatable and movable between the support member and the fastening member so as to adjust the angle and position of the cutting unit relative to the handle unit in a spherical and three-dimensional manner.

Another example is provided by DE20116509 which discloses a pair of scissors for cutting off high-lying branches. The scissors include an auxiliary handle coupled to an elongate tube of the scissors. The auxiliary handle includes a first housing part that is symmetrical with a second housing part. The first and second housing parts are pivotally coupled at one end and are threadably coupled to a cap member at another end. The auxiliary handle can be removed from the elongate tube by removing the cap member.

Therefore, in light of the foregoing, there is a need for an improved tool.

### SUMMARY

In view of the above, it is an objective of the present invention to solve or at least reduce the problems discussed above. The objective is at least partially achieved with a handheld tool according to claim 1. The handheld tool includes a pole member having a first end and a second end distal to the first end. The handheld too further includes an implement member operably disposed at the first end of the pole member. The handheld too further includes a handle member associated with the pole member. The handheld too further includes at least one holding bar extending outwardly from the pole member, the holding bar being adapted to rotate about the pole member. The handheld tool further includes at least one gripping handle and the at least one gripping handle is movably disposed on the pole member with the gripping handle includes at least one of a first cylindrical portion and a second cylindrical portion. The second cylindrical portion of the gripping handle is provided with at least one rib being a spiral rib. The holding bar includes a clamping portion conforming to one of the gripping handle and the pole member and being adapted to be moved along the spiral rib to move the holding bar on the pole member.

According to an aspect of the present invention, the second cylindrical portion of the gripping handle is disposed towards the handle member.

According to an aspect of the present invention, the first cylindrical portion of the gripping handle extends from the second end of the pole member and disposed towards the implement member.

According to an aspect of the present invention, the clamping portion accommodates a fastener for detachably connecting the holding bar.

According to an aspect of the present invention, the second cylindrical portion of the gripping handle is further provided with at least one circular rib.

According to an aspect of the present invention, the clamping portion is adapted to be detached from a circular rib for moving the holding bar on another rib.

According to an aspect of the present invention, the holding bar is composed of or at least partly covered by a flexible material.

According to an aspect of the present invention, the holding bar includes one of circular cross section and polygonal cross section.

According to an aspect of the present invention, the handheld tool includes one of a pruning lopper and a tool with at least one movable member.

According to an aspect of the present invention, the second cylindrical portion is attached with a knob and is adapted to be moved along the pole member.

According to an aspect of the present invention, the second cylindrical portion is integral with the clamping portion of the holding bar.

According to an aspect of the present invention, the second cylindrical portion is non-integral with the clamping portion of the holding bar.

According to an aspect of the present invention, the disclosed handheld tool finds in potential application in pruning tools. However, the handheld tool may also find its application in other gardening tools.

According to an aspect of the present invention, the handheld tool having the movable gripping handle provides an advantage of positioning the gripping handle at any point along the pole member.

According to an aspect of the present invention, the handheld tool having the rotatable holding bar aids in rotating the holding bar at any angle about the pole member. Thus, the operator may find it easy in operating the handheld tool

According to an aspect of the present invention, as both the gripping handle and the holding bar are adapted to be moved and rotated, respectively, the handheld tool can be operated by any operator.

According to an aspect of the present invention, the disclosed handheld tool having the gripping handle on the pole member helps in providing gripping for the operator or the operator during operation of the tool.

According to an aspect of the present invention, the disclosed handheld tool facilitates in cutting tight branches conveniently.

### BRIEF DESCRIPTION OF THE DRAWINGS

The invention will be described in more detail with reference to the enclosed drawings, wherein:
FIG. **1** shows a perspective view of a handheld tool, according to an embodiment of the present invention;
FIG. **2** shows an exploded view of the handheld tool shown in FIG. **1****,** according to an embodiment of the present invention;
FIG. **3** shows a perspective view of a portion of the handheld tool shown in FIG. **1** and FIG. **2** having a holding bar at a first lateral position along a gripping handle, according to an embodiment of the present invention;
FIG. **4** shows a perspective view of a portion of the handheld tool shown in FIGS. **1-3** having the holding bar at a second lateral position along the gripping handle, according to an embodiment of the present invention;
FIG. **5** shows a perspective view of a portion of the handheld tool shown in FIGS. **1-4** having the holding bar at a first angular position about a pole member, according to an embodiment of the present invention;
FIG. **6** shows a perspective view of a portion of the handheld tool shown in FIGS. **1-5** having the holding bar at a second angular position about the pole member, according to an embodiment of the present invention;
FIG. **7** shows a perspective view of a handheld tool, according to another embodiment of the present invention;
FIG. **8** shows a perspective view of a portion of the handheld tool shown in FIG. **7** having the holding bar at a first lateral position along the gripping handle, according to another embodiment of the present invention;
FIG. **9** shows a perspective view of a portion of the handheld tool of FIG. **7** and FIG. **8** having the holding bar at a second lateral position along the gripping handle, according to another embodiment of the present invention;
FIG. **10** shows a perspective view of a portion of the handheld tool shown in FIGS. **7-9** having the holding bar at a first angular position about a pole member, according to another embodiment of the present invention; and
FIG. **11** shows a perspective view of a portion of the handheld tool shown in FIGS. **7-10** having the holding bar at a second angular position about the pole member, according to another embodiment of the present invention.

### DESCRIPTION OF EMBODIMENTS

The present invention will be described more fully hereinafter with reference to the accompanying drawings, in which example handheld tools

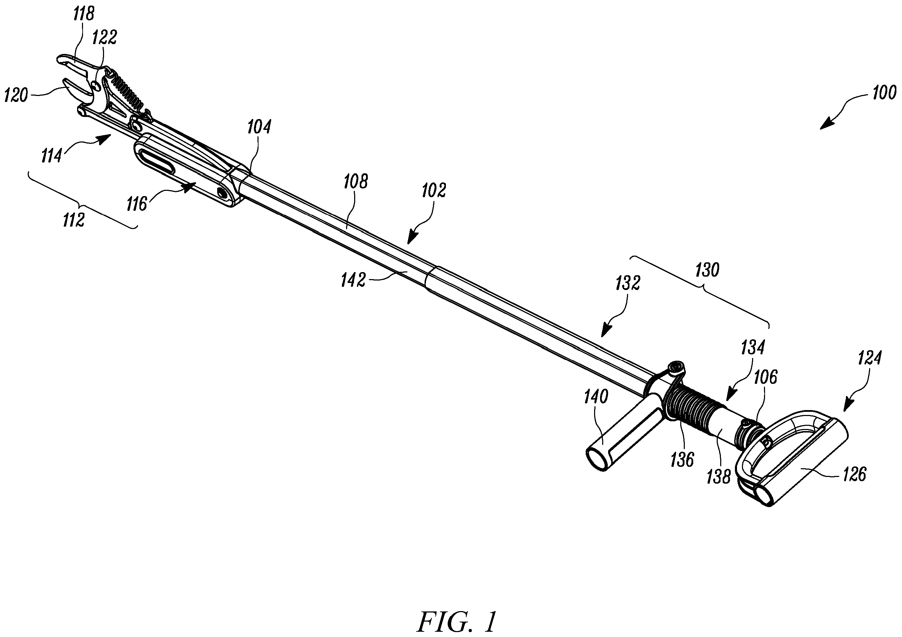

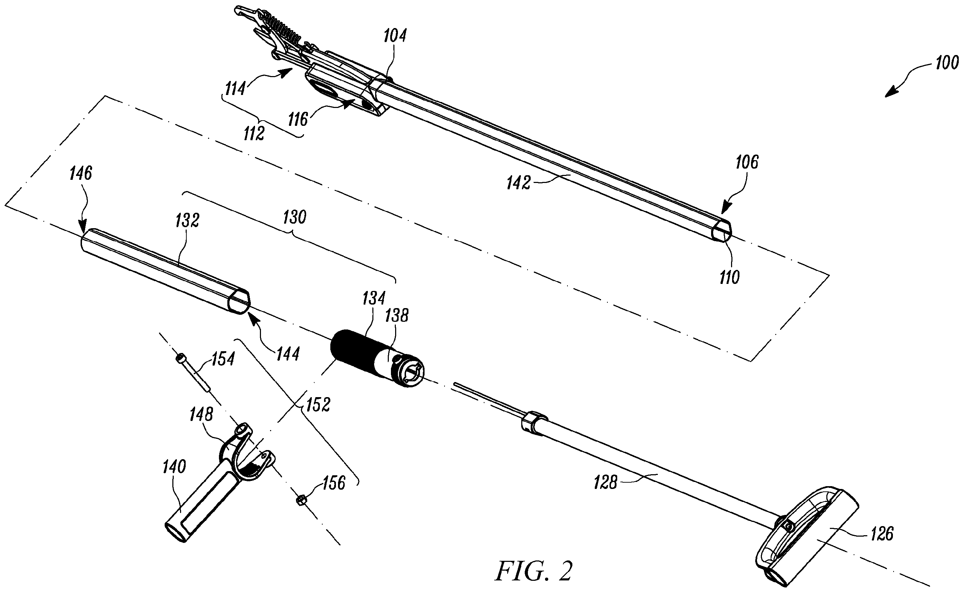

FIG. **1** illustrates a perspective view of a handheld tool **100,** according to an embodiment of the present invention. The handheld tool **100** may be a cutting tool including, but not limited to, a pruning lopper or a tool with at least one movable member. In the illustrated FIG. 1, the cutting tool is the pruning lopper. The term "handheld tool **100"** is also interchangeably used as "pruning looper" or "tool" in the present disclosure. The tool **100** includes a pole member **102** having a first end **104** and a second end **106** distal to the first end **104.** The pole member **102** is a tubular member **108** having a central hole portion **110** (shown in FIG. **2**). It is to be understood that the pole member **102** may be configured in any shape that facilitates telescopic movement inside the pole member **102.** For example, the pole member **102** may be having a cross section like, a circular, a triangular or a polygonal. The first end **104** of the pole member **102** is adapted to connect with an implement member **112** of the tool **100.**

The implement member **112** of the tool **100** includes a tool portion **114** and a housing **116.** The tool portion **114** may include at least one movable member **118** and at least one non-movable member **120.** As illustrated in the FIG. **1****,** the tool portion **114** includes a blade arrangement with the movable member **118,** embodied as a movable blade. The movable member **118** is pivotally connected to the non-movable member **120.** The term "movable member" as used herein is interchangeably used as "movable blade". Also, the term "non-movable member" is interchangeably used as "stationary blade". The movable blade **118** may perform a pivotal movement with respect to the stationary blade **120** about a pivot point **122** during a cutting action. The movable blade **118** and the stationary blade **120** may include cutting edges, for performing cutting or trimming operations. The stationary blade **120** may be designed to provide guidance to parts like branches to move towards the cutting edges. Further, various details of the implement member **112,** as illustrated in the FIG. **1****,** are purely exemplary in nature, and the implement member **112** may include any other design.

The second end **106** of the pole member **102** is adapted to connect with a handle member **124.** The handle member **124** includes a D-gripping handle **126** and an elongated tube portion **128** (shown in FIG. **2**). The elongated tube portion **128** may be adapted to extend from the D-gripping handle **126** and may be telescopically associated with the central hole portion **110** of the pole member **102.** The telescopic association between the elongated tube portion **128** and the pole member **102** allows sliding movement of the elongated tube portion **128** relative to the pole member **102.**

The handheld tool **100** may be operated using the D-gripping handle **126** and an actuating mechanism (not shown) connected to the D-gripping handle **126** and the implement member **112.** The actuating mechanism is adapted to be disposed inside the pole member **102.** The actuating mechanism is used for actuating the implement member **112** of the tool **100.**

Further, the second end **106** of the pole member **102** is provided with at least one gripping handle **130.** The gripping handle **130** may be movably arranged on the pole member **102.** The gripping handle **130** further includes a first cylindrical portion **132** and a second cylindrical portion **134.** In the illustrated embodiment, the first cylindrical portion **132** of the gripping handle **130** extends towards the implement member **112.** The second cylindrical portion **134** of the gripping handle **130** is arranged from the second end **106** of the pole member **102** and extends towards the D-gripping handle **126.**

The first cylindrical portion **132** and the second cylindrical portion **134** may be substantially in circular shaped cross-section. In various other embodiments, the first cylindrical portion **132** and the second cylindrical portion **134** may have an elliptical shaped cross-section, a triangular shaped cross-section, a square shaped cross-section, a rectangular shaped cross-section, a polygonal shaped cross-section, or any other shape of cross-section known in the art. The second cylindrical portion **134** of the gripping handle **130** is provided with at least one rib **136** on an outer surface **138** thereof.

In an embodiment, the at least one rib **136** includes one of circular ribs and a spiral rib. The second cylindrical portion **134** is adapted to be attached with a holding bar **140** extending outwardly from the pole member **102.**

In the illustrated embodiment, the holding bar **140** is adapted to be rotatably connected on the second cylindrical portion **134** of the gripping handle **130.** It is to be understood that the holding bar **140** may be arranged either on the gripping handle **130** or on the pole member **102,** which may be based on requirement of a user or an operator or a situation. In an exemplary embodiment, the gripping handle **130** and the holding bar **140** may be adapted to be integral parts. In another embodiment, the gripping handle **130** and the holding bar **140** may be adapted to be non-integral parts. In an exemplary embodiment, the holding bar **140** may be composed of a flexible material like, an elastomeric material or a plastic material partly or wholly covering the holding bar **140.** In an embodiment, the gripping handle **130** may be fixedly connected through a close tolerance fit between an inner surface (not shown) of the gripping handle **130** and an outer surface **142** of the pole member **102** such that the gripping handle **130** and the pole member **102** may undergo minimal or zero displacement relative to each other. In an embodiment, the holding bar **140** may be composed of a plastic material and may be covered by a flexible material like, an elastomeric material. The gripping handle **130** and the holding bar **140** are adapted to provide an increased gripping area on the handheld tool **100** and may provide a balanced holding of the handheld tool **100** during its operation.

FIG. **2** illustrates an exploded view of the handheld tool **100** shown in FIG. **1****,** according to an embodiment of the present invention. The implement member **112** of the handheld tool **100** is operably connected to the first end **104** of the pole member **102.** The central hole portion **110** of the pole member **102** at the second end **106** is adapted to accommodate the elongated tubular portion **128** of the handle member **124.** The first cylindrical portion **132** of the gripping handle **130** is adapted to be slidably disposed onto the pole member **102,** in such a way that the first cylindrical portion **132** is extended towards the implement member **112.** In an embodiment, the first cylindrical portion **132** is adapted to conform to the outer surface **142** of the pole member **102.** The gripping handle **130** including the second cylindrical portion **134** is adapted to be arranged onto the pole member **102** at the second end **106** and is disposed to contact a second end **144** of the first cylindrical portion **132.** A first end **146** of the first cylindrical portion **132** is distal to the second end **144** and towards the implement member **112.**

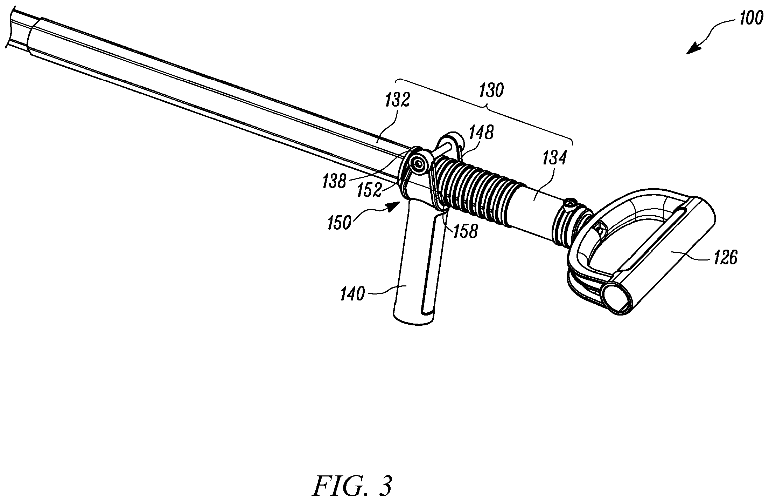

In the illustrated embodiment, the holding bar **140** is adapted to be movably arranged onto the second cylindrical portion **134.** Specifically, the holding bar **140** including a clamping portion **148** is adapted to be arranged at a first end **150** (shown in FIG. **3**) of the second cylindrical portion **134.** The clamping portion **148** of the holding bar **140** is adapted to conform to the outer surface **138** of the second cylindrical portion **134** and is fastened using a fastener **152** including, a bolt **154** and a nut **156.** In another embodiment, the clamping portion **148** of the holding bar **140** is adapted to conform to the outer surface **138** of the second cylindrical portion **134** having the ribs **136** and is fastened using the fastener **152.** The clamping portion **148** accommodates the fastener **152** for detachably connecting the holding bar **140** with the second cylindrical portion **134.**

FIG. **3** illustrates a perspective view of a portion of the handheld tool **100** shown in FIG. **1** and FIG. **2****,** having the holding bar **140** at a first lateral position along a gripping handle **130,** according to an embodiment of the present invention. The term "first lateral position" as used herein refers to a position of the holding bar **140** at the first end **150** of the second cylindrical portion **134.** The holding bar **140** is movably coupled on the gripping handle **130** using the fastener **152.** An inner surface **158** of the clamping portion **148** contacts the outer surface **138** of the second cylindrical portion **134** of the gripping handle **130** for fastening the holding bar **140** with the second cylindrical portion **134.**

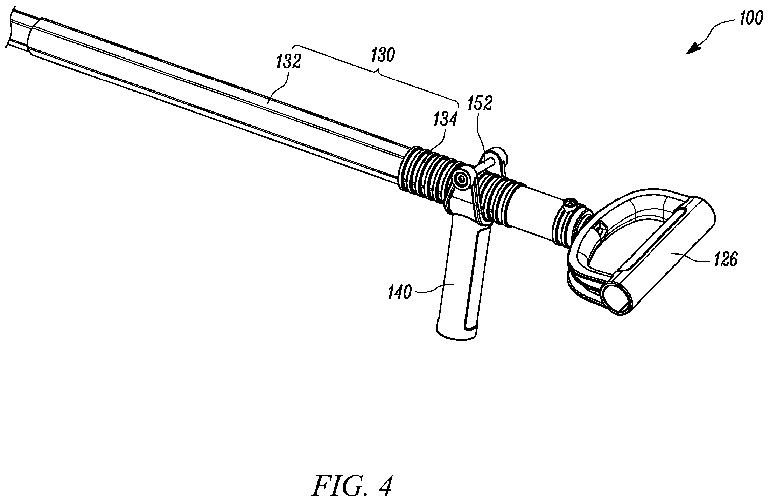

FIG. **4** illustrates a perspective view of a portion of the handheld tool **100** shown in FIGS.**1-3** having the holding bar **140** at a second lateral position along the gripping handle **130,** according to an embodiment of the present invention. The term "second lateral position" as used herein refers to any position of the holding bar **140** along the second cylindrical portion **134** distinct from the first lateral position. As the holding bar **140** is movably coupled on the gripping handle **130** using the fastener **152,** the holding bar **140** is adapted to be positioned at the second lateral portion by slightly loosening the fastener **152** and positioning the holding bar **140** along the second cylindrical portion **134** based on a requirement of the user or the operator or the situation.

In an embodiment, the clamping portion **148** is adapted to be partially detached from a circular rib by rotating the fastener **152** for loosening clamping action of the clamping portion **148** of the holding bar **140.** Due to partial detachment of the clamping portion **148** from the circular rib, a gap between the clamping portion **148** and the outer surface of the second cylindrical portion **134** is increased which may be sufficient for moving the clamping portion **148** along the second cylindrical portion **134.** The clamping portion **148** along with the holding bar **140** can be moved from the first lateral position to the second lateral position. During the movement, the clamping portion **148** is moved onto another circular rib on the second cylindrical portion **134.** Once the clamping portion **148** along with the holding bar **140** is moved laterally from the first lateral position to the second lateral position, the fastener **152** can be rotated in a direction opposite to the direction of loosening the fastener **152.** In the illustrated embodiment, the fastener **152** is the bolt **154** and nut **156.** However, it should be understood that the fastener **152** may include any other fastener **152** such as, but not limited to a cotter and pin joint, which can serve the purpose of temporarily removing or loosening the fastener **152** for moving the clamping member **148** and assembling or fastening the removed or loosened fastener **152** after moving the clamping member **148.**

In another embodiment, the clamping portion **148** is adapted to be moved along the spiral rib to move the holding bar **140** on the second cylindrical portion **134** or on the pole member **102.** For moving the clamping portion **148** from the first lateral position to the second lateral position, the clamping portion **148** is adapted to be partially detached from the spiral rib by rotating the fastener **152** for loosening clamping action of the clamping portion **148** of the holding bar **140** on the second cylindrical portion **134.** Due to partial detachment of the clamping portion **148** from the spiral rib, the clamping portion **148** along with the holding bar **140** can be moved from the first lateral position to the second lateral position by rotating the clamping portion **148** about the spiral rib. During the movement, the clamping portion **148** is moved onto another adjacent spiral rib on the second cylindrical portion **134.** Once the clamping portion **148** along with the holding bar **140** is moved laterally from the first lateral position to the second lateral position, the fastener **152** can be rotated in a direction opposite to the direction of loosening the fastener **152.** In the illustrated embodiment, the fastener **152** is the bolt **154** and the nut **156.** However, it should be understood that the fastener **152** can include any other fastener **152** any other fastener **152** such as, but not limited to a cotter and pin joint, which can serve the purpose of temporarily removing or loosening the fastener **152** for moving the clamping member **148** and assembling or fastening the removed or loosened fastener **152** after moving the clamping member **148.**

The holding bar **140** can be fixed once the operator or the user displaces the holding bar **140** to a required second lateral position on the second cylindrical portion **134.** The displacement of the holding bar **140** is carried out manually.

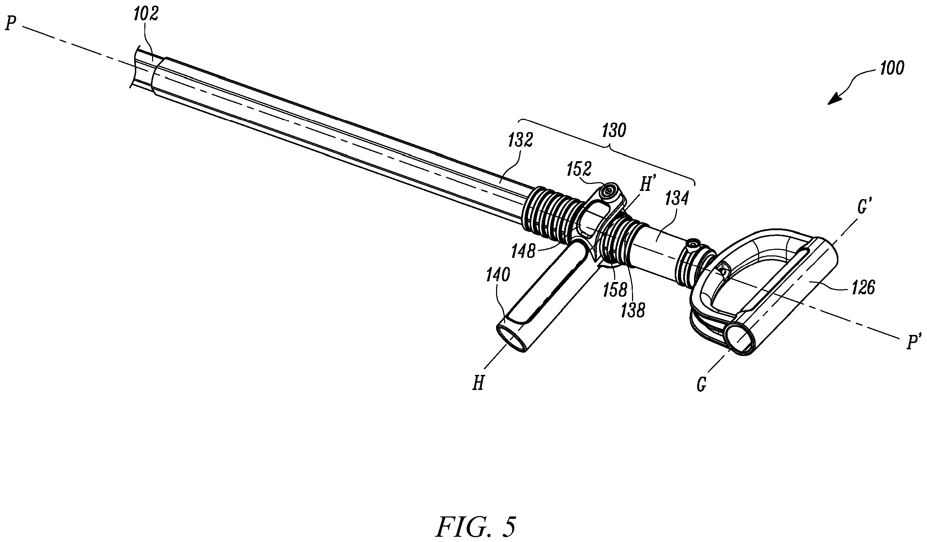

FIG. **5** illustrates a perspective view of a portion of the handheld tool **100** shown in FIGS. **1-4** having the holding bar **140** at a first angular position about a pole member **102,** according to an embodiment of the present invention. The term "first angular position" as used herein refers to an angular orientation of the holding bar **140** with respect to the pole member **102** and the D-gripping handle **126.** The holding bar **140** is rotatably coupled on the gripping handle **130** using the fastener **152.** The inner surface **158** of the clamping portion **148** contacts the outer surface **138** of the second cylindrical portion **134** of the gripping handle **130** for fastening the holding bar **140** with the second cylindrical portion **134.** When the holding bar **140** is at the first angular position, an axis **H-H'** of the holding bar **140** and an axis **G-G'** of the D-gripping handle **126** are parallel to each other and perpendicular to an axis **P-P'** of the pole member **102.**

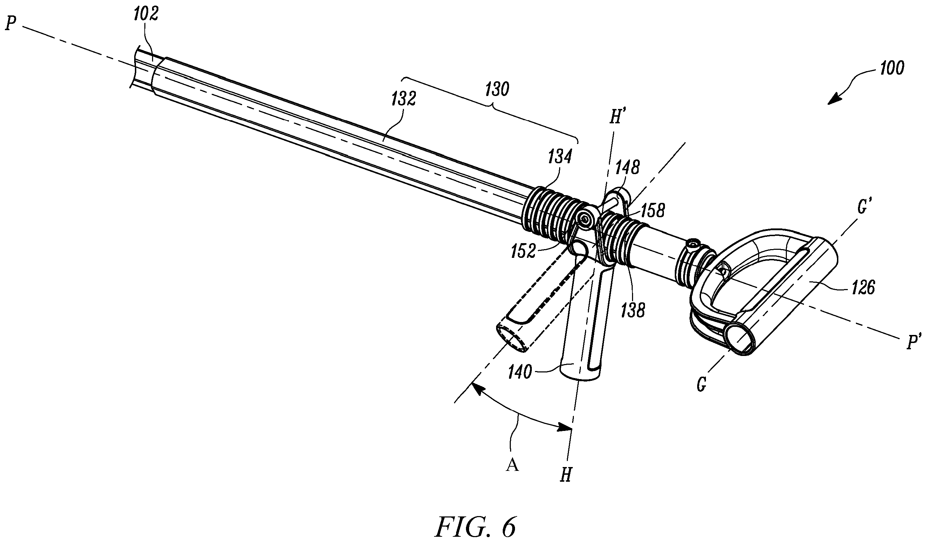

FIG. **6** illustrates a portion of the handheld tool **100** shown in FIGS. **1-5** having the holding bar **140** at a second angular position about the pole member **102,** according to an embodiment of the present invention. The term "second angular position" as used herein refers to an angular orientation of the holding bar **140** with respect to the pole member **102** and the D-gripping handle **126** other than the first angular position. The holding bar **140** is rotatably coupled on the gripping handle **130** using the fastener **152.** The inner surface **158** of the clamping portion **148** contacts the outer surface **138** of the second cylindrical portion **134** of the gripping handle **130** for fastening the holding bar **140** with the second cylindrical portion **134.** When the holding bar **140** is at the second angular position, the axis **H-H'** of the holding bar **140** and the axis **G-G'** of the D-gripping handle **126** are non-parallel to each other, making an angle **"A"** between the axis **H-H'** of the holding bar **140** and the axis **G-G'** of the D-gripping handle **126** and perpendicular to the axis **P-P'** of the pole member **102.** For positioning the holding bar **140** in the second angular position, the operator or the user loosens the fastener **152** such that the clamping portion **148** is released from the outer surface **138** of the second cylindrical portion **134** for angularly positioning the holding bar **140** with respect the D-gripping handle **126** and the pole member **102.**

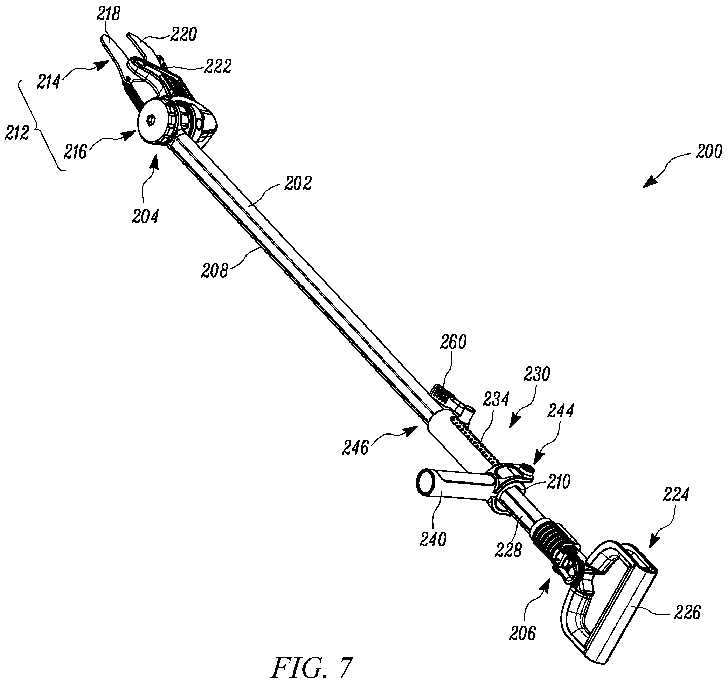

FIG. **7** illustrates a perspective view of a handheld tool **200,** according to another embodiment of the present invention. The tool **200** includes a pole member **202** having a first end **204** and a second end **206** distal to the first end **204.** In one embodiment, the pole member **202** is similar to that of the pole member **102** as described in FIGS. **1-6****.** The pole member **202** is a tubular member **208** having a central hole portion **210.** In one embodiment, the tubular member **208** and the central hole portion **210** are similar to that of the tubular member **108** and the central hole portion **110** as described in FIGS. **1-6****.** It is to be understood that the pole member **202** may be configured in any shape that facilitates the telescopic movement inside the pole member **202.** For example, the pole member **202** may be having a cross section like, a circular, a triangular or a polygonal. The first end **204** of the pole member **202** is adapted to connect with an implement member **212** of the tool **200.** In one embodiment, the first end **204** and the implement member **212** are similar to that of the first end **104** and the implement member **112** as described in FIGS. **1-6****.**

The implement member **212** of the tool **200** includes a tool portion **214** and a housing **216.** The tool portion **214** may include at least one movable member **218** and at least one non-movable member **220.** In one embodiment, the tool portion **214** and the housing **216** are similar to that of the tool portion **114** and the housing **116** as described in FIGS. **1-6****.** As illustrated in the FIG. **7****,** the tool portion **214** includes a blade arrangement with the movable member **218,** embodied as a movable blade. The movable member **218** is pivotally connected to the non-movable member **220.** The movable blade **218** may perform a pivotal movement with respect to the stationary blade **220** about a pivot point **222** during a cutting or trimming operations. The movable blade **218** and the stationary blade **220** perform cutting or trimming operations. In one embodiment, the movable member **218** and the stationary blade **220** are similar to that of the movable member **118** and the stationary blade **120** as described in FIGS. **1-6****.**

The stationary blade **220** may be designed to provide guidance to parts like branches to move towards the cutting edges. Further, various details of the implement member **212,** as illustrated in the FIG. **7****,** are purely exemplary in nature.

The second end **206** of the pole member **202** is adapted to connect with a handle member **224.** The handle member **224** includes a D-gripping handle **226** and an elongated tube portion **228.** The elongated tube portion **228** may be adapted to extend from the D-gripping handle **226** and may be telescopically associated with the central hole portion **210** of the pole member **202.** In one embodiment, the handle member **224,** the D-gripping handle **226** and the elongated tube portion **228** are similar to that of the handle member **124,** the D-gripping handle **126** and the elongated tube portion **128** as described in FIGS. **1-6****.**

The telescopic association between the elongated tube portion **228** and the pole member **202** allows sliding movement of the elongated tube portion **228** relative to the pole member **202.**

The handheld tool **200** may be operated using the D-gripping handle **226** and an actuating mechanism (not shown) connected to the D-gripping handle **226** and the implement member **212.** The actuating mechanism is adapted to be disposed inside the pole member **202.** The actuating mechanism is used for actuating the implement member **212** of the tool **200.**

Further, the second end **206** of the pole member **202** is provided with a gripping handle **230.** The gripping handle **230** may be movably arranged on the pole member **202.** The gripping handle **230** includes a cylindrical portion **234.** In one embodiment, the gripping handle **230** and the cylindrical portion **234** are similar to that of the gripping handle **130** and the second cylindrical portion **134** as described in FIGS. **1-6****.** The cylindrical portion **234** is interchangeably used as a second cylindrical portion **234** in the present invention. In the illustrated embodiment, the second cylindrical portion **234** of the gripping handle **230** extends from the second end **206** of the pole member **202** and located towards the handle member **224.** In the illustrated embodiment, a holding bar **240** is adapted to be rotatably connected on the second cylindrical portion **234** of the gripping handle **230** at a second end **244** of the second cylindrical portion **234.** In one embodiment, the holding bar **240** and the second end **244** are similar to that the holding bar **140** and the second end **144** as described in FIGS. **1-6****.** It is to be understood that the holding bar **240** is to be arranged on any one of the gripping handle **230** and the pole member **202.** In an exemplary embodiment, the gripping handle **230** and the holding bar **240** may be integral parts. In another embodiment, the gripping handle **230** and the holding bar **240** may be non-integral parts. In an exemplary embodiment, the holding bar **240** may be composed of at least partly covered by a flexible material like, an elastomeric material or a plastic material. In an embodiment, the gripping handle **230** may be fixedly connected through a close tolerance fit between an inner surface (not shown) of the gripping handle **230** and an outer surface **242** of the pole member **202** such that the gripping handle **230** and the pole member **202** may undergo minimal or zero displacement relative to each other. The holding bar **240** may be composed of a plastic material or an elastomeric material. The gripping handle **230** and the holding bar **240** are adapted to provide increased gripping area on the handheld tool **100** during its operation.

The second cylindrical portion **234** of the gripping handle **230** is provided with a knob **260** at a first end **246** of the second cylindrical portion **234** for moving the second cylindrical portion **234** along the pole member **202.** In one embodiment, the first end **246** of the second cylindrical portion **234** is similar to that the first end **146** as described in FIGS. **1-6****.**

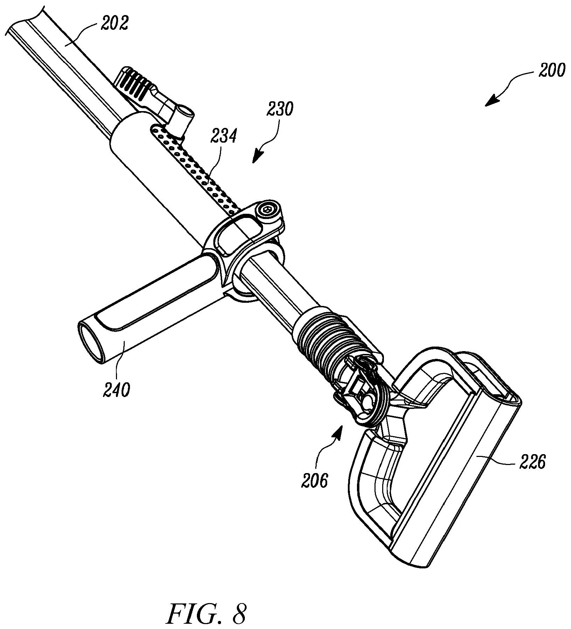

FIG. **8** illustrates a perspective view of a portion of the handheld tool **200** shown in the FIG. **7** having the holding bar **240** at a first lateral position along the gripping handle **230,** according to another embodiment of the present invention. The term "first lateral position" as used herein refers to a position of the second cylindrical portion **234** along the pole member **202** when the second cylindrical portion **234** is away from the second end **206** of the pole member **202.** The holding bar **240** coupled with the second cylindrical portion **234** is movably displaced along the pole member **202.**

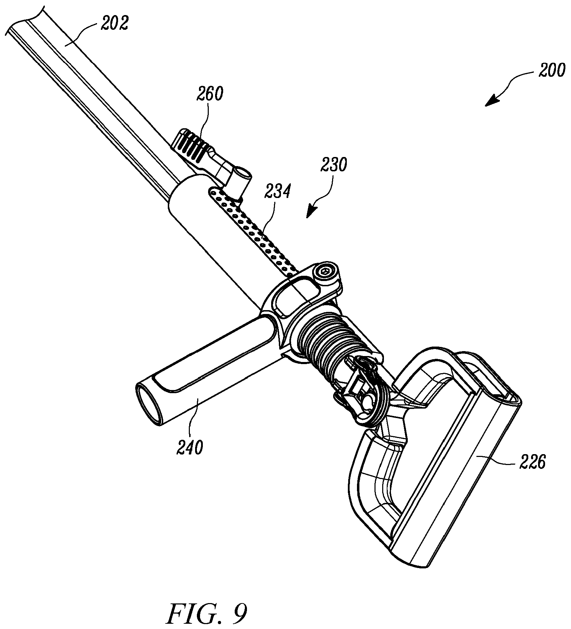

FIG. **9** shows a perspective view of a portion of the handheld tool **200** of FIG. **7** and FIG. **8** having the holding bar **240** at a second lateral position along the gripping handle **230,** according to another embodiment of the present invention. The term "second lateral position" as used herein refers to a position of the second cylindrical portion **234** along the pole member **202** when the second cylindrical portion **234** is laterally moved along the pole member **202** from the first lateral position. As the second cylindrical portion **234** is movably coupled on the pole member **202** using the knob **260,** the second cylindrical portion **234** along with the holding bar **240** is adapted to be positioned at the second lateral portion by slightly or partially loosening the knob **260** and positioning the second cylindrical portion **234** and the holding bar **240** along the pole member **202** based on requirement of the operator or the user.

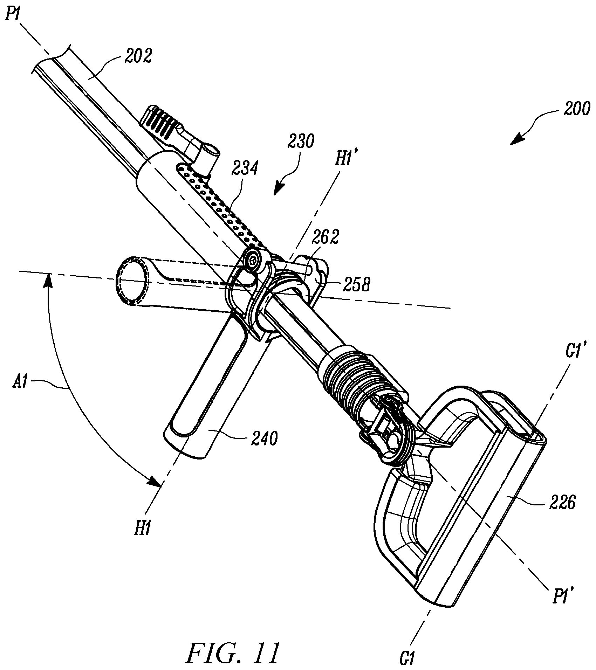

In an embodiment, the clamping portion **248** is adapted to be partially detached from a circular rib by rotating the fastener **252** for loosening clamping action of the clamping portion **248** of the holding bar **240.** Due to partial detachment of the clamping portion **248** from the circular rib, a gap (not shown) between the clamping portion **248** and the outer surface (not shown) of the second cylindrical portion **234** is increased which may be sufficient for moving the clamping portion **248** along the second cylindrical portion **234.** The clamping portion **248** along with the holding bar **240** can be moved from the first lateral position to the second lateral position. During the movement, the clamping portion **248** is moved onto another circular rib on the second cylindrical portion **234.** Once the clamping portion **248** along with the holding bar **240** is moved laterally from the first lateral position to the second lateral position, the fastener **252** can be rotated in a direction opposite to the direction of loosening the fastener **252.** In the illustrated embodiment, the fastener **252** is the bolt **254** (shown in FIG. **11**) and nut the **256** (shown in FIG. **11**). However, it should be understood that the fastener **252** can include any other fastener **252** such as, but not limited to a cotter and pin joint, which can serve the purpose of temporarily removing or loosening the fastener **252** for moving the clamping member **248** and assembling or fastening the removed or loosened fastener **152** after moving the clamping member **248.**

In another embodiment, the clamping portion **248** is adapted to be moved along a spiral rib (now shown) on the second cylindrical portion **234** to move the holding bar **240** on the second cylindrical portion **234.** For moving the clamping portion **248** from the first lateral position to the second lateral position, the clamping portion **248** is adapted to be partially detached from the spiral rib by rotating the fastener **252** for loosening clamping action of the clamping portion **248** of the holding bar **240** on the second cylindrical portion **234.** Due to the partial detachment of the clamping portion **248** from the spiral rib, the clamping portion **248** along with the holding bar **240** can be moved from the first lateral position to the second lateral position by rotating the clamping portion **248** about the spiral rib. During the rotation, the clamping portion **248** is moved onto another adjacent spiral rib on the second cylindrical portion **234.** Once the clamping portion **248** along with the holding bar **240** is moved laterally from the first lateral position to the second lateral position, the fastener **252** can be rotated in a direction opposite to the direction of loosening the fastener **252.** However, it should be understood that the fastener **252** can include any other fastener **252** such as, but not limited to a cotter and pin joint, which can serve the purpose of temporarily removing or loosening the fastener for moving the clamping member **248** and assembling or fastening the removed or loosened fastener after moving the clamping member **248.**

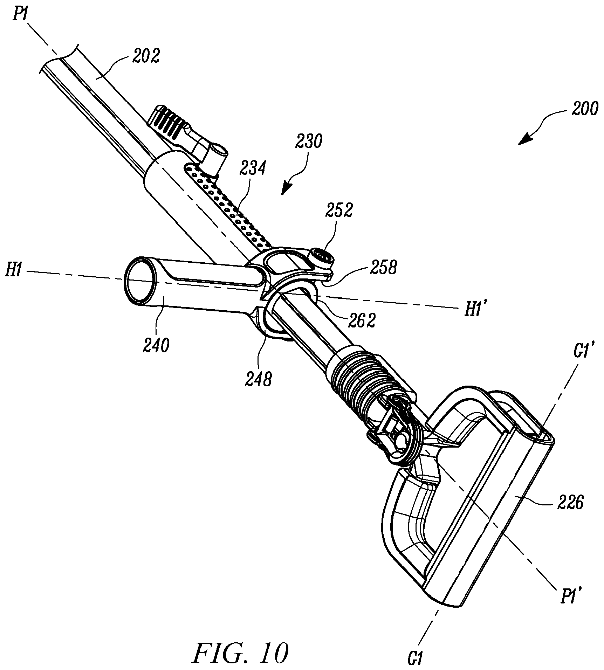

FIG. **10** illustrates a perspective view of a portion of the handheld tool **200** shown in FIGS. **7-9** having the holding bar **240** at a first angular position about the pole member **202,** according to another embodiment of the present invention. The term "first angular position" as used herein refers to an orientation of the holding bar **240** with respect to the pole member **202** and the D-gripping handle **226.** The holding bar **240** is rotatably coupled on the second cylindrical portion **234** of the gripping handle **230** using the fastener **252.** An inner surface **258** of the clamping portion **248** contacts an outer surface **262** of the second cylindrical portion **234** of the gripping handle **230** for fastening the holding bar **240** with the second cylindrical portion **234.** When the holding bar **240** is in the first angular position, an axis **H1-H1'** of the holding bar **240** and an axis **G1-G1'** of the D-gripping handle **226** are parallel to each other and perpendicular to an axis **P1-P1'** of the pole member **202.**

FIG. **11** illustrates a perspective view of a portion of the handheld tool **200** shown in FIGS. **7-10** having the holding bar **240** at a second angular position about the pole member **202,** according to another embodiment of the present invention. The term "second angular position" as used herein refers to an orientation of the holding bar **240** with respect to the pole member **202** and the D-gripping handle **226** other than the first angular position. The holding bar **240** is rotatably coupled on the second cylindrical portion **234** of the gripping handle **230** using the fastener **252.** The inner surface **258** of the clamping portion **248** contacts the outer surface **262** of the second cylindrical portion **234** for fastening the holding bar **240** with the second cylindrical portion **234.** When the holding bar **240** is in the second angular position, the axis **H1-H1'** of the holding bar **240** and the axis **G1-G1'** of the D-gripping handle **226** are non-parallel to each other, making an angle **"A1"** between the axis **H1-H1'** of the holding bar **240** and the axis **G1-G1'** of the D-gripping handle **226** and perpendicular to the axis **P1-P1'** of the pole member **202.** The operator or the user slightly loosens the fastener **252** for angularly positioning the holding bar **240** with respect the D-gripping handle **226** and the pole member **202.**

The disclosed handheld tool **100, 200** finds in potential application in pruning tools. However, the handheld tool **100, 200** may also find its application in other gardening tools.

The disclosed handheld tool **100, 200** having the movable gripping handle **130, 230** provides an advantage of positioning the gripping handle **126, 226** at any point along the pole member **102, 202.** The disclosed handheld tool **100, 200** having the rotatable holding bar **140, 240** aids in rotating the holding bar **140, 240** at any angle about the pole member **102, 202.** Thus, the operator may find it easy in operating the handheld tool **100, 200.**

As both the gripping handle **130, 230** and the holding bar **140, 240** is adapted to moved and rotated, respectively, the handheld tool **100, 200** can be operated by any operator.

The disclosed handheld tool **100, 200** having the gripping handle **130, 230** on the pole member **102, 202** help in providing gripping for the operator or the user during operation of the tool **100, 200.**

The disclosed handheld tool **100, 200** facilitates in cutting tight branches conveniently.

### LIST OF ELEMENTS

- 100: Handheld tool or Tool
- 102: Pole member
- 104: First end
- 106: Second end
- 108: Cylindrical tubular member
- 110: Central hole portion
- 112: Implement member
- 114: Tool portion
- 116: Housing
- 118: Movable member
- 120: Non-movable member
- 122: Pivot point
- 124: Handle member
- 126: D-gripping handle
- 128: Elongated tube portion
- 130: Gripping handle
- 132: First cylindrical portion
- 134: Second cylindrical portion
- 136: Rib
- 138: Outer surface
- 140: Holding bar
- 142: Outer surface
- 144: Second end
- 146: First end
- 148: Clamping portion
- 150: First end
- 152: Fastener
- 154: Bolt
- 156: Nut
- 158: Inner surface
- 200: Handheld tool
- 202: Pole member
- 204: First end
- 206: Second end
- 208: Cylindrical tubular member
- 210: Central hole portion
- 212: Implement member
- 214: Tool portion
- 216: Housing
- 218: Movable member
- 220: Non-movable member
- 222: Pivot point
- 224: Handle member
- 226: D-gripping handle
- 228: Elongated tube portion
- 230: Gripping handle
- 234: Second cylindrical portion
- 236: Rib
- 238: Outer surface
- 240: Holding bar
- 242: Outer surface
- 244: Second end
- 246: First end
- 248: Clamping portion
- 252: Fastener
- 254: Bolt
- 256: Nut
- 258: Inner surface
- 260: Knob
- 262: Outer surface
- H-H': Axis
- G-G': Axis
- P-P': Axis
- A: Angle
- H1-H1': Axis
- G1-G1': Axis
- P1-P1': Axis
- A1: Angle

## Claims

1. A handheld tool (**100**, **200**) comprising:
a pole member (**102**, **202**) having a first end (**104**, **204**) and a second end (**106**, **206**) distal to the first end (**104**, **204**);
an implement member (**112**, **212)** operably disposed at the first end (**104**, **204**) of the pole member (**102**, **202**);
a handle member (**124**, **224**) associated with the pole member (**102**, **202**), and
at least one holding bar (**140**, **240**) extending outwardly from the pole member (**102**, **202**), the holding bar (**140**, **240**) being adapted to rotate about the pole member **(102, 202**)
the handheld tool (100, 200) further includes at least one gripping handle (130, 230),
wherein the at least one gripping handle (130, 230) includes a second cylindrical portion (134, 234) provided with at least one rib (136, 236);
**characterized in that:**
the at least one rib is a spiral rib,
wherein the holding bar (**140, 240**) includes a clamping portion (**148**, **248**) conforming to one of the gripping handle (**130**, **230**) and the pole member (**102**, **202**),
and wherein the clamping portion (**148**, **248**) is adapted to be moved along the spiral rib to move the holding bar (**140**, **240**) on the pole member (**102**, **202**).

2. The handheld tool **(100, 200**) of claim 1 wherein the at least one gripping handle (**130**, **230**) is movably disposed on the pole member (**102**, **202**).

3. The handheld tool **(100, 200**) of claim 2, wherein the gripping handle (**130**, **230**) further includes a first cylindrical portion (**132**).

4. The handheld tool (**100**, **200**) of claims 1 to 3, wherein the second cylindrical portion (**134**, **234**) of the gripping handle (**130**, **230**) is disposed towards the handle member (**124**, **224**).

5. The handheld tool (**100**) of claim 3, wherein the first cylindrical portion (**132**) of the gripping handle (**130**) extends from the second end (**106**) of the pole member (**102**) and disposed towards the implement member (**112**).

6. The handheld tool **(100, 200)** of any of the preceding claims, wherein the holding bar **(140, 240)** is rotatably connected to one of the gripping handle **(130, 230)** and the pole member **(102, 202).**

7. The handheld tool **(100, 200)** of claim 1, wherein the clamping portion **(148, 248)** accommodates a fastener **(152, 252)** for detachably connecting the holding bar **(140, 240).**

8. The handheld tool **(100, 200)** of any one of the preceding claims, wherein the holding bar **(140, 240)** is composed of or at least partly covered by a flexible material.

9. The handheld tool **(100, 200)** of any one of the preceding claims, wherein the holding bar **(140, 240)** includes one of circular cross section and polygonal cross section.

10. The handheld tool **(100, 200)** of any one of the preceding claims, wherein the handheld tool **(100, 200)** includes one of a pruning lopper and a tool with at least one movable member.

11. The handheld tool (**200**) of any one of the preceding claims, wherein the second cylindrical portion (**234**) is attached with a knob (**260**) and is adapted to be moved along the pole member (**202**).

12. The handheld tool (**100**) of any one of the preceding claims, wherein the second cylindrical portion (**134 234**) is integral with the clamping portion (**148**, **248**) of the holding bar (**140, 240**).

13. The handheld tool (**100, 200**) of any one of the preceding claims, wherein the second cylindrical portion (**134, 234**) is non-integral with the clamping portion (**148, 248**) of the holding bar (**140, 240**).

## Patentansprüche

1. Ein handgehaltenes Werkzeug (100, 200), umfassend:
ein Stangenelement (102, 202) mit einem ersten Ende (104, 204) und einem zweiten Ende (106, 206), das distal zum ersten Ende (104, 204) liegt;
ein Geräteteil (112, 212), das funktionsfähig am ersten Ende des Stangenelements (102, 202) angeordnet ist;
ein Handhabungsteil (124, 224), das mit dem Stangenelement (102, 202) verbunden ist,
und mindestens einen Haltegriff (140, 240), der sich von dem Stangenelement (102, 202) nach außen erstreckt, wobei der Haltegriff (140, 240) um das Stangenelement (102, 202) drehbar eingerichtet ist,
das handgehaltene Werkzeug (100, 200) ferner mindestens einen Klemmstiel (130, 230) umfasst, wobei der mindestens eine Klemmstiel (130, 230) einen zweiten zylindrischen Abschnitt (134, 234) aufweist, der mit mindestens einer Rippe (136, 236) versehen ist;
**dadurch gekennzeichnet, dass**:
die mindestens eine Rippe (136, 236) eine Spiralrippe ist,
der Haltegriff (140, 240) einen Klemmabschnitt (148, 248) aufweist, der entweder zum Klemmstiel (130, 230) oder zum Stangenelement (102, 202) angepasst ist,
wobei der Klemmabschnitt (148, 248) so ausgelegt ist, dass er entlang der Spiralrippe bewegt werden kann, um den Haltegriff (140, 240) auf dem Stangenelement (102, 202) zu bewegen.

2. Das handgehaltene Werkzeug (100, 200) nach Anspruch 1, wobei der mindestens eine Klemmstiel (130, 230) beweglich an dem Stangenelement (102, 202) angeordnet ist.

3. Das handgehaltene Werkzeug (100, 200) nach Anspruch 2, wobei der Klemmstiel (130, 230) ferner einen ersten zylindrischen Abschnitt (132) aufweist.

4. Das handgehaltene Werkzeug (100, 200) nach einem der Ansprüche 1 bis 3, wobei der zweite zylindrische Abschnitt (134, 234) des Klemmstiels (130, 230) in Richtung des Handhabungsteils (124, 224) angeordnet ist.

5. Das handgehaltene Werkzeug (1 00) nach Anspruch 3, wobei sich der erste zylindrische Abschnitt (132) des Klemmstiels (130) vom zweiten Ende (106) des Stangenelements (102) aus erstreckt und in Richtung des Geräteteils (112) angeordnet ist.

6. Das handgehaltene Werkzeug (100, 200) nach einem der vorhergehenden Ansprüche, wobei der Haltegriff (140, 240) mit einem der beiden Teile, dem Klemmstiel (130, 230) und dem Stangenelement (102, 202), drehbar verbunden ist.

7. Das handgehaltene Werkzeug (100, 200) nach Anspruch 1, wobei der Klemmabschnitt (148, 248) ein Befestigungselement (152, 252) zum lösbaren Verbinden des Haltegriffs (140, 240) aufnimmt.

8. Das handgehaltene Werkzeug (100, 200) nach einem der vorhergehenden Ansprüche, wobei der Haltegriff (140, 240) aus einem flexiblen Material besteht oder zumindest teilweise damit überzogen ist.

9. Das handgehaltene Werkzeug (100, 200) nach einem der vorhergehenden Ansprüche, wobei der Haltegriff (140, 240) einen kreisförmigen Querschnitt oder einen polygonalen Querschnitt aufweist.

10. Das handgehaltene Werkzeug (100, 200) nach einem der vorhergehenden Ansprüche, wobei das handgehaltene Werkzeug (100, 200) entweder eine Astschere oder ein Werkzeug mit mindestens einem beweglichen Element umfasst.

11. Das handgehaltene Werkzeug (200) nach einem der vorhergehenden Ansprüche, wobei der zweite zylindrische Abschnitt (234) mit einem Knopf (260) befestigt ist und entlang des Stangenelements (202) bewegt werden kann.

12. Das handgehaltene Werkzeug (100) nach einem der vorhergehenden Ansprüche, wobei der zweite zylindrische Teil (134, 234) mit dem Klemmteil (148, 248) des Haltegriffs (140, 240) einstückig ist.

13. Das handgehaltene Werkzeug (100, 200) nach einem der vorhergehenden Ansprüche, wobei der zweite zylindrische Abschnitt (134, 234) nicht einstückig mit dem Klemmabschnitt (148, 248) des Haltegriffs (140, 240) ist.

## Revendications

1. Outil à main (100, 200) comprenant :
un élément de perche (102, 202) ayant une première extrémité (104, 204) et une seconde extrémité (106, 206) distale par rapport à la première extrémité (104, 204) ;
un élément d'outil (112, 212) disposé de manière fonctionnelle au niveau de la première extrémité (104, 204) de l'élément de perche (102, 202) ;
un élément de poignée (124,224) associé à l'élément de perche (102,202), et
au moins une barre de maintien (140, 240) s'étendant vers l'extérieur de l'élément de perche (102, 202), la barre de maintien (140, 240) étant adaptée pour tourner autour de l'élément de perche (102, 202)
l'outil à main (100, 200) comprend en outre au moins une poignée de préhension (130, 230), dans lequel l'au moins une poignée de préhension (130, 230) comprend une seconde partie cylindrique (134, 234) pourvue d'au moins une nervure (136, 236) ;
**caractérisé en ce que** :
l'au moins une nervure est une nervure en spirale,
dans lequel la barre de maintien (140, 240) comprend une partie de serrage (148, 248) s'adaptant à un parmi la poignée de préhension (130, 230) et l'élément de perche (102, 202),
et dans lequel la partie de serrage (148, 248) est adaptée pour être déplacée le long de la nervure en spirale afin de déplacer la barre de maintien (140, 240) sur l'élément de perche (102, 202).

2. Outil à main (100, 200) selon la revendication 1, dans lequel l'au moins une poignée de préhension (130, 230) est disposée de manière mobile sur l'élément de perche (102, 202).

3. Outil à main (100, 200) selon la revendication 2, dans lequel la poignée de préhension (130, 230) comprend en outre une première partie cylindrique (132).

4. Outil à main (100, 200) selon les revendications 1 à 3, dans lequel la seconde partie cylindrique (134, 234) de la poignée de préhension (130, 230) est disposée vers l'élément de poignée (124, 224).

5. Outil à main (100) selon la revendication 3, dans lequel la première partie cylindrique (132) de la poignée de préhension (130) s'étend à partir de la seconde extrémité (106) de l'élément de perche (102) et est disposée vers l'élément d'outil (112).

6. Outil à main (100, 200) selon l'une quelconque des revendications précédentes, dans lequel la barre de maintien (140, 240) est reliée de manière rotative à un parmi la poignée de préhension (130, 230) et l'élément de perche (102, 202).

7. Outil à main (100, 200) selon la revendication 1, dans lequel la partie de serrage (148, 248) accueille un élément de fixation (152, 252) pour connecter de manière amovible la barre de maintien (140, 240).

8. Outil à main (100, 200) selon l'une quelconque des revendications précédentes, dans lequel la barre de maintien (140, 240) est composée ou au moins partiellement recouverte d'un matériau souple.

9. Outil à main (100, 200) selon l'une quelconque des revendications précédentes, dans lequel la barre de maintien (140, 240) présente une parmi une section transversale circulaire et une section transversale polygonale.

10. Outil à main (100, 200) selon l'une quelconque des revendications précédentes, dans lequel l'outil à main (100, 200) comprend un parmi un élagueur et un outil avec au moins un élément mobile.

11. Outil à main (200) selon l'une quelconque des revendications précédentes, dans lequel la seconde partie cylindrique (234) est fixée à l'aide d'un bouton (260) et est adaptée pour être déplacée le long de l'élément de perche (202).

12. Outil à main (100) selon l'une quelconque des revendications précédentes, dans lequel la seconde partie cylindrique (134 234) est solidaire de la partie de serrage (148, 248) de la barre de maintien (140, 240).

13. Outil à main (100, 200) selon l'une quelconque des revendications précédentes, dans lequel la seconde partie cylindrique (134, 234) n'est pas solidaire de la partie de serrage (148, 248) de la barre de maintien (140, 240).
